# NEUE EUROPÄISCHE PATENTSCHRIFT

(11) **EP 1 377 803 B2**
(45) Veröffentlichungstag und Bekanntmachung des Hinweises auf die Entscheidung über den Einspruch: **01.04.2009**
(45) Hinweis auf die Patenterteilung: 21.09.2005
(21) Anmeldenummer: 02702616.0
(22) Anmeldetag: 06.03.2002
(51) Int. Cl.: B01F 13/10, B01F 15/04, G01G 19/22, G01G 23/00, G05D 11/13

(54) **VORRICHTUNG UND VERFAHREN ZUM MISCHEN VON SUBSTANZEN, INSBESONDERE VON FARBSTOFFEN**
DEVICE AND METHOD FOR THE MIXING OF SUBSTANCES, IN PARTICULAR OF DYES
DISPOSITIF ET PROCEDE POUR LE MELANGE DE SUBSTANCES, EN PARTICULIER DE COLORANTS

(30) Priorität: 09.03.2001 DE 10111730
(43) Veröffentlichungstag der Anmeldung: 07.01.2004
(73) Patentinhaber: Mettler-Toledo AG, 8606 Greifensee (CH)
(72) Erfinder: SCHMID, Johannes, CH-8633 Wolfhausen (CH)
(86) Internationale Anmeldenummer: PCT/IB2002/000650
(87) Internationale Veröffentlichungsnummer: WO 2002/073142

(56) Entgegenhaltungen:
- EP-A- 0 484 564
- WO-A-01/91600
- WO-A-01/91601
- WO-A-98/30189
- WO-A1-00/68137
- DE-C1- 19 854 651
- US-A- 4 766 548
- US-A- 5 153 825
- US-A- 5 718 268
- 'Internet-Katalogblatt zum Kolorimeter CR-231 (Minolta)' 26 April 2006 - 26 April 2006,

## Beschreibung

Die Erfindung betrifft eine Vorrichtung und ein Verfahren zum Mischen von festen, pulverförmigen und/oder flüssigen Substanzen, insbesondere von Farbstoffen, nach dem Oberbegriff des Patentanspruchs 1 bzw. 10.

Im Handel erhältliche Farbstoffe bestehen aus pigmentierten Flüssigkeiten, die sich nach dem Auftragen auf einen Körper in einen dünnen, normalerweise lichtundurchlässigen Film verwandeln. Die Flüssigkeiten enthalten Harze, Lösungsmittel, Pigmente und gegebenenfalls zusätzliche Additive, welche die Eigenschaften des Farbstoffes beeinflussen. Durch die Harze wird die Festigkeit des resultierenden Films nach dem Austrocknen des Lösungsmittels bestimmt. Die Pigmentierung bestimmt den Farbton des Farbstoffes.

Der beim Mischen von Farbstoffen resultierende Farbton entsteht durch Subtraktion der einzelnen Farbtöne aus weissem Licht. Durch die Anteile von einzelnen Farbstoffen, die in einer Mischformel festgelegt werden, wird daher der Farbton des resultierenden Gemisches bestimmt. Sofern die Mischung nicht exakt nach der Mischformel erfolgt, entsteht eine Abweichung vom gewünschten Farbton, die insbesondere dann störend wirkt, wenn ein in Originalfarbe gestrichener Körper stellenweise neu bemalt bzw. lackiert wird.

Aus [1], US-Patentschrift No. 5,153,825, Spalten 1 und 2 ist bekannt, dass Farbproduzenten Mikrofiche-Listen mit Mischformeln an Kunden abgeben, welche die gesuchten Mischformeln anhand von Projektoren darstellen, beispielsweise auf einem Handzettel notieren und anschliessend im Labor oder der Werkstatt die angegebene Mischung zusammenstellen.

Das Interpretieren der angegebenen Mischformel, die herstellerabhängig formatiert sein kann, sowie das Abschreiben auf einen Handzettel ist zeitaufwendig und oft mit Fehlern verbunden. Sofern keine Standardmengen im Mischprozess hergestellt werden sollen, sind zudem Umrechnungen notwendig.

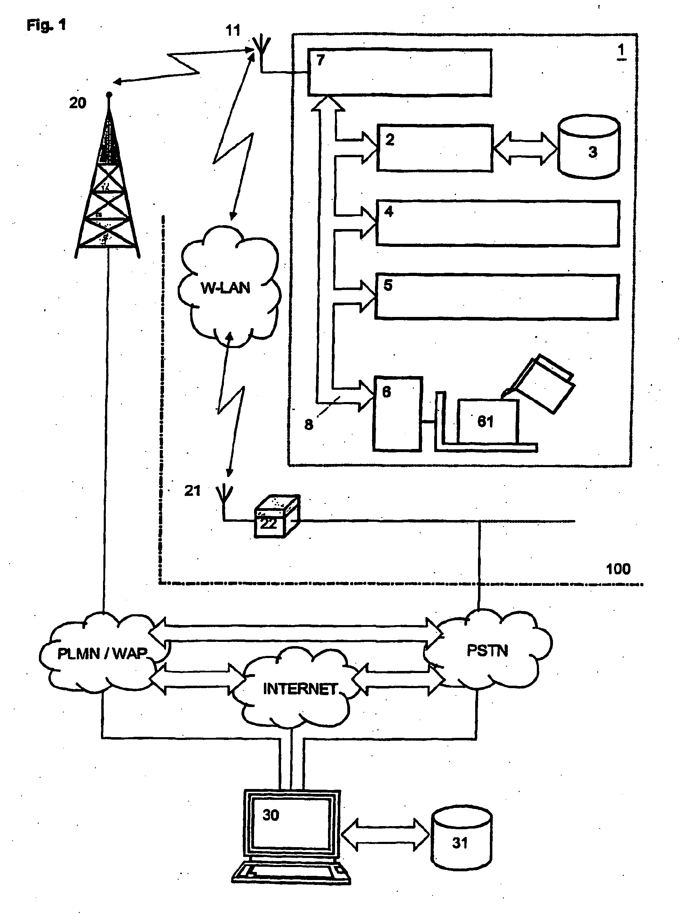

In [1], Spalte 2 wird daher ein Computersystem vorgeschlagen, welches erlaubt, Mischformeln und zugehörige Nummern abzurufen und mittels eines Druckers beispielsweise auf Etiketten auszudrucken. Das System erlaubt ferner die Berechnung von Anteilen, die zur Mischung einer nicht standardmässig vorgegebenen Menge notwendig sind. Gleichzeitig dient das System zur Durchführung von Kostenberechnungen sowie zur Überwachung des Inventars (siehe auch [1], Fig. 1).

Aus [2], US-Patentschrift No. 5,718,268 ist bekannt, wie Flüssigkeiten in genau dosierten Mengen automatisch in Behälter abgefüllt werden können. Bevorzugt werden Waagen eingesetzt, die es erlauben, die eingefüllten Mengen genau zu messen. Auf diese Weise können die für ein Mischprodukt benötigten Anteile genau dosiert werden.

Das in [1], Spalte 2 beschriebene Computersystem ermöglicht dem Anwender daher das bequeme Abrufen, Berechnen und Ausdrucken von Daten einer Mischformel. Die erhaltenen Daten werden in eine Messvorrichtung, vorzugsweise in eine computergesteuerte Waage eingegeben, wonach die entsprechenden Substanzen manuell in einen Mischbehälter eingefüllt werden können. Möglich ist ferner die Verwendung eines mit einer Messvorrichtung versehenen Mischautomaten, beispielsweise die Vorrichtung gemäss [2], die nach Eingabe der Daten die Substanzen mit den festgelegten Anteilen automatisch in einen Mischbehälter einfüllt.

Die Verwendung des beschriebenen Computersystems für das Mischen von Substanzen ist jedoch mit erheblichem Aufwand verbunden, der insbesondere durch das Auslesen und/oder Ausdrucken der Daten, den Transfer der Daten vom Computersystem zur Mess- bzw. Mischvorrichtung sowie die Eingabe der Daten in die Mess- bzw. Mischvorrichtung verursacht wird. Durch unkorrekte Eingaben der Mischformeln können ferner fehlerhafte Mischprodukte entstehen.

Ergünzend wird noch auf die EP 0 484 564 A1 und die WO 00/68137 verwiesen.

Der vorliegenden Erfindung liegt die Aufgabe zugrunde, eine Vorrichtung zum Mischen von Substanzen, insbesondere von Farbstoffen, zu schaffen, die in einfacher Weise und praktisch fehlerfrei bedient werden kann. Ferner ist ein entsprechendes Verfahren zum Betrieb dieser Vorrichtung anzugeben.

Diese Aufgabe wird mit einer Vorrichtung und einem Verfahren gelöst, welche die in Anspruch 1 bzw. 9 angegebenen Merkmale aufweisen. Vorteilhafte Ausgestaltungen der Erfindung sind in weiteren Ansprüchen angegeben.

Die erfindungsgemässe Vorrichtung, die zum Mischen von Substanzen, insbesondere von Farbstoffen geeignet ist, weist eine Prozessoreinheit auf, die mit einer zur Speicherung von Mischformeln dienenden lokalen Speichereinheit und einer Waage verbunden ist, mit der Substanzen manuell oder automatisch in Anteilen in einen Behälter einfüllbar sind, die in einer aus der Speichereinheit abgerufenen Mischformel festgelegt sind. Die Mischformel enthält gegebenenfalls weitere Informationen, wie etwa Hinweise zur Anwendung der gemischten Substanzen, Bedienungsanweisungen, Betriebsprogramme oder Ähnliches.

Die Prozessoreinheit ist ferner mit einem Kommunikationsmodul verbunden, mit dem drahtlos Kommunikationsverbindungen zu einem abgesetzten Datenserver aufgebaut werden können, so dass regelmässig oder bedarfsweise eine Aktualisierung der Mischformeln bzw. der Daten in der zur Vorrichtung gehörenden lokalen Speichereinheit erfolgt. Die Aktualisierung der Daten kann vom Anwender gesteuert, automatisch oder initialisiert durch den Datenserver erfolgen. Der Datenserver kann beliebig weit entfernt liegen. Es kann aber auch eine im Werkareal vorhandene, lokale Apparatur als Zwischenstation dienen, die ihrerseits mit dem externen Server verkehrt. Die Verbindung muss normaler weise nur für kurze Zeit aufrecht erhalten werden, so dass entsprechend tiefe Kommunikationsgebühren resultieren.

Die Prozessoreinheit, die Speichereinheit, eine Anzeigeeinheit, eine Eingabeeinheit, sowie das Kommunikationsmodul sind in der Waage integriert.

Ein Anwender kann stets aktuelle Mischformeln daher unmittelbar an der Mischvorrichtung abrufen und anschliessend einen Mischprozess starten oder eine Mischung unter Beachtung der Anzeige der Waage manuell durchführen. Das Übertragen von Daten zur Mischvorrichtung durch den Anwender sowie damit verbundene Fehlermöglichkeiten entfallen somit. Die Berechnung von Mischanteilen für frei wählbare Mengen von Mischprodukten erfolgt automatisch durch die Prozessoreinheit.

Die erfindungsgemässe Mischvorrichtung, die kostengünstig herstellbar ist und mit einem verhältnismässig geringen Aufwand, ohne zusätzliche Hilfsgeräte, betrieben werden kann, verfügt daher stets über einen aktuellen Datenstand. Zudem können Misch- und Abfüllprozesse anhand der erfindungsgemässen Mischvorrichtung in einfacher Weise automatisiert werden, wodurch sich die Betriebsaufwendungen weiter reduzieren.

Nachfolgend wird die Erfindung anhand von Zeichnungen näher erläutert. Dabei zeigt :
- Fig. 1: eine erfindungsgemässe Vorrichtung 1 zum manuellen Mischen von Substanzen, die drahtlos mit einem externen Datenserver verbunden ist und
- Fig. 2: eine erfindungsgemässe Vorrichtung 1, geeignet zum automatisierten Mischen von Substanzen.

Figur 1 zeigt eine erfindungsgemässe Vorrichtung 1, die zum Mischen von Substanzen, insbesondere von Farbstoffen, geeignet ist - sie ist in der Folge kurz als Mischvorrichtung 1 bezeichnet. Die Mischvorrichtung 1, die normalerweise innerhalb eines Werkareals 100 installiert ist, weist eine Prozessoreinheit 2 auf, die über ein Bussystem 8 mit einer lokalen Speichereinheit 3, mit einer Anzeigeeinheit 4, mit einer Eingabeeinheit 5, mit einem Kommunikationsmodul 7 sowie mit einer Waage 6 verbunden ist, mit der Anteile von Substanzen in festgelegten Mengen manuell in einen Behälter 61 einfüllbar sind. Die Mengen der einzelnen Mischanteile sind in Mischformeln festgelegt, die aus der lokalen Speichereinheit 3 abrufbar sind.

Das Gewicht der in den Behälter 61 eingefüllten Mengen wird wie in Figur 1 dargestellt, mittels einer Waage 6 gemessen.

Das Soll-Gewicht und das Ist-Gewicht oder eine verbliebene Differenz einer zu mischenden Komponente wird dazu auf der Anzeigeeinheit 4 dargestellt, so dass der Anwender die erforderliche Menge präzise in den Behälter 61 einfüllen kann. Das Erreichen der vorgegebenen Dosis während des Abfüllens der Substanzen kann dem Anwender daher optisch auf der Anzeigeeinheit 4 oder auch akustisch signalisiert werden.

Das Kommunikationsmodul 7, das mit einer Antenne 11 versehen ist, dient zur Erstellung von drahtlosen Verbindungen zu einem externen Datenserver 30, von dessen Speichereinheit 31 Daten von Mischformeln zur lokalen Speichereinheit 3 übertragbar sind, so dass die Daten der Mischvorrichtung, insbesondere die Mischformeln, ferner allfällige Hinweise zur Herstellung und zur Anwendung der Mischung und gegebenenfalls auch Betriebsprogramme, stets auf dem aktuellen Stand gehalten werden können. Die Verwendung eines zusätzlichen Computersystems oder der anderweitige Transfer von Daten entfallen somit.

Verbindungen zum externen Datenserver 30 können über ein lokales Funknetz W-LAN und gegebenenfalls weiter über ein öffentliches Kommunikationsnetz PSTN (Public Switched Telephone Network), beispielsweise das ISDN (Integrated Services Digital Network), aufgebaut werden. Insbesondere aber hat die erfindungsgemässe Vorrichtung 1 die Möglichkeit der Errichtung einer Verbindung direkt über ein öffentliches Mobilfunknetz PLMN (Public Land Mobile Network), das beispielsweise nach den GSM- oder den UMTS-Spezifikationen aufgebaut ist und vorzugsweise das Wireless Application Protocol WAP unterstützt.

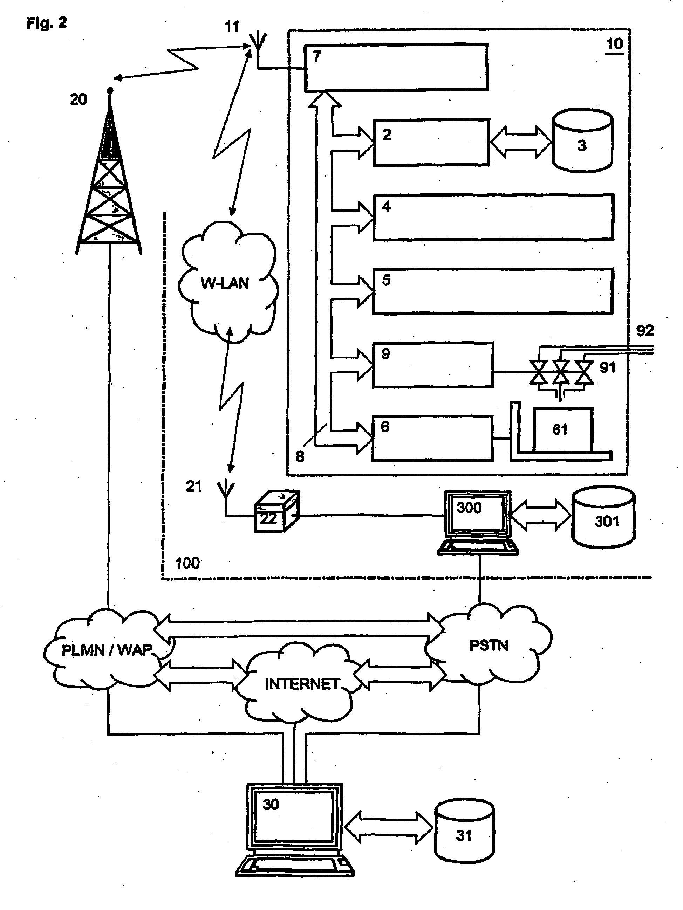

Die Verbindung zum externen Datenserver 30 kann, wie in Figur 2 gezeigt, auch über einen lokalen Datenserver 300 erfolgen, der beispielsweise als Datenpuffer dient. Aktuelle Daten werden beispielsweise vom externen Datenserver 30 zum lokalen Datenserver 300 übertragen und von diesem über ein drahtloses lokales Netz W-LAN anschliessend an eine oder mehrere Mischvorrichtungen 1 übertragen. Eine solche Pufferung kann zum Beispiel im Zusammenhang mit einer Lagerverwaltung sinnvoll sein, wenn der Betrieb nach Umstellung eines Mischrezepts durch den Lieferanten zunächst die bisherige Mischformel weiter verwendet und erst ändert, wenn die Vorräte aufgebraucht sind.

Grundlagen drahtloser lokaler Netze W-LAN (Wireless Local Area Networks) sind beispielsweise in [3], Jerry D. Gibson, THE MOBILE COMMUNICATIONS HANDBOOK, 2nd Edition, CRC PPRESS, Boca Raton 1999, Kapitel 32, Seiten 32-1 bis 32-14 beschrieben. Auf Seite 32-2, Figur 32.1 sind mehrere portable Computersysteme gezeigt, die ein drahtloses Ad-hoc Netz bilden.

Drahtlose lokale Ad-hoc Netze können beispielsweise nach der Bluetooth Protokoll Architektur aufgebaut sein, die durch die Bluetooth Special Interest Group festgelegt wurde (siehe [4], Bluetooth WHITE PAPER, Bluetooth Protocol Architecture, Version 1.0, herausgegeben am August 25, 1999 von der Special Interest Group (SIG) (siehe www.bluetooth.com)). Ad-hoc Netzwerke erlauben den Aufbau von Master-Slave bzw. Client-Server-Verbindungen zwischen verschiedenen Netzeinheiten. Möglich ist der Aufbau von Punkt-Punkt-Verbindungen oder Punkt-Mehrpunkt-Verbindungen, wie sie in [5], J. Bray, F. Sturman, Bluetooth: Connect Without Cables, Prentice Hall Inc., New York 2001, Kapitel 1 (Overview), Seiten 7-9 beschrieben sind.

Somit können eine oder auch mehrere erfindungsgemässe Mischvorrichtungen 1, die nach den Bluetooth Spezifikationen arbeitende Kommunikationsmodule 7 aufweisen, mit einem lokalen Datenserver 300 (siehe Figur 2) kommunizieren, der seinerseits über ein Mobilfunknetz PLMN oder ein Festnetz PSTN, gegebenenfalls auch über das Internet mit einem externen Datenserver 30 verbunden ist. Die Kommunikation kann aber, wie weiter unten beschrieben, auch auf anderem Weg erfolgen.

Weitere drahtlose lokale Netzwerke W-LAN sind in [7], B. Walke, Mobilfunknetze und ihre Protokolle, Band 2, B. G. Teubner Verlag, Stuttgart 2000, Kapitel 10, Seiten 327-335 beschrieben.

Möglich ist ferner die Verwendung eines nach der DECT-Technologie arbeitenden lokalen Kommunikationsnetzes. Die DECT-Technologie sowie Realisierungsmöglichkeiten von DECT-Systemen sind in [7] auf Seiten 107-122 beschrieben. Aus den Abbildungen 5.13, 5.14 und 5.15 ist ersichtlich, dass nach dem DECT-Standard arbeitende schnurlose Endgeräte an ein öffentliches Festnetz ISDN/PSTN oder an ein Mobilfunknetz PLMN/GSM ankoppelbar sind.

Erfindungsgemässe Mischvorrichtungen 1 können also vorteilhaft in bestehende drahtlose lokale Netze W-LAN eingebunden werden. Sofern, beispielsweise in kleineren Betrieben, kein drahtloses lokales Netz W-LAN vorhanden ist oder aufgebaut werden soll, erfolgt die Verbindung vom Kommunikationsmodul 7 direkt zu einem öffentlichen Mobilfunknetz PLMN, das beispielsweise nach den GSM-Standards arbeitet (siehe [6], B. Walke, Mobilfunknetze und ihre Protokolle, Band 1, B. G. Teubner Verlag, Stuttgart 2000, Kapitel 3, Seiten 135 - 194). Auch ein lokaler Datenserver 300 kann auf diesem Wege angesprochen werden, sei es, dass er - wie in Fig. 2 gezeigt - am Festnetz PSTN angeschlossen ist und so mit dem PLMN in Verbindung steht, sei es, dass er - nicht gezeichnet - selber ein Mobilfunk-Kommunikationsmodul enthält und über die Antenne 21 und die Antenne 20 einer Basisstation mit dem PLMN in Verbindung steht.

In [6], Kapitel 3.10, Seiten 272-283 sind Dienste eines GSM-Mobilfunknetzes PLMN beschrieben, die zur Übertragung von Daten geeignet sind. Die Trägerdienste (Bearer Services) erlauben, die bittransparente Übertragung von Daten mittels verbindungsorientierter kanal- oder paketvermittelnder Datenübertragung auf einem Übertragungssystem das entsprechend den unteren drei Schichten des ISO/OSI Modells definiert ist.

Die Übertragung der Daten wird dabei über die höheren Protokollschichten mittels der in der Mischvorrichtung 1 und im externen Datenserver 30 vorgesehenen Anwendungsprogramme gesteuert.

Vorzugsweise erfolgt die Verbindung zum externen Datenserver 30 über das Internet. Wie in [8], R. Sellin, Neue mobile Perspektiven mit WAP und GPRS, Der Fernmeldeingenieur, Verlag für Wissenschaft und Leben, Georg Heidecker GmbH, Heft 5/'00, Erlangen 2000, auf Seite 14 gezeigt, können auf die Trägerdienste der Mobilfunknetze PLMN (beispielsweise GSM, GPRS, CDMA, PHS, etc.) auch die Protokolle des Wireless Application Protocol (WAP) aufgesetzt sein, mittels derer ein Mobilfunkendgerät bzw. ein WAP-Handy, wie in [8], Seite 10, Bild 2 gezeigt, eine Client-Server Verbindung zu einem im Internet vorgesehenen Web-Server aufbauen und von diesem Daten (Content) beziehen kann.

Eine GPRS-Netzstruktur und der Aufbau eines virtuellen privaten Netzes mittels GPRS (General Packet Radio Service) ist in [8], Seiten 21-27 beschrieben. Weitere Verfahren und Einrichtungen für einen drahtlosen Internet-Zugang sind beispielsweise in [9], US-Patentschrift No. 5,905,719 beschrieben.

Das Kommunikationsmodul 7 arbeitet daher vorzugsweise nach den entsprechenden Spezifikationen bzw. Protokollen der landbasierten oder satellitengestützten Mobilfunksysteme, wie UMTS und GSM, möglichst mit aufgesetztem WAP, und/oder nach mindestens einem Protokoll für ein W-LAN, insbesondere nach den DECT- oder den Bluetooth-Spezifikationen. In Figur 1 ist gezeigt, dass die Verbindung über Funk von der Antenne 11 des Kommunikationsmoduls 7 zur Antenne 20 einer Basisstation des zellularen Netzwerks GSM/UMTS oder zu einer Antenne 21 des drahtlosen, lokalen Netzwerkes W-LAN erfolgt, welches über ein Schnittstellenmodul 22 mit dem öffentlichen Kommunikationsnetz PSTN, möglicherweise aber auch mit dem Mobilnetz GSM/UMTS verbunden ist.

Die Kommunikationsverbindungen zwischen dem Kommunikationsmodul 7 und dem zugeordneten externen Datenserver 30 werden regelmässig oder nach Bedarf erstellt. Nach dem Aufbau der Verbindung werden jeweils die aktuellen Daten von Mischformeln zur lokalen Speichereinheit 3 übertragen. Dabei können die Daten von Mischformeln auch Bedienungsanleitungen, Betriebsprogramme für das automatische Mischen, Hinweise zur Anwendung der gemischten Substanzen und Ähnliches enthalten.

Mittels der übertragenen Daten werden in der lokalen Speichereinheit 3 beispielsweise neue Mischformeln hinzugefügt, bestehende Mischformeln modifiziert und/oder ersetzt. Vorzugsweise werden auch die Betriebsprogramme über die beschriebenen drahtlosen Verbindungen aktualisiert.

Die Aktualisierung der Daten in der lokalen Speichereinheit 3 erfolgt beispielsweise vor dem Beginn oder nach Beendigung des Mischprozesses, in fest vorgegebenen oder wählbaren Zeitabständen, manuell gesteuert nach Bedarf oder initialisiert durch einen internen oder externen Datenserver 300, 30, gegebenenfalls nach einer Revision der internen oder externen Datenbank 301, 31.

Im externen Datenserver 30 kann zudem das Datum oder/und eine entsprechende Nummer der Datenversion gespeichert sein, die in den zugehörigen Mischvorrichtungen 1 verwendet werden. Bei einer Änderung der Version kann der externe Datenserver 30 seine Klienten entsprechend aktualisieren. Möglich ist ferner die Speicherung der Versionsinformation in den Mischvorrichtungen 1, die durch periodische Anfrage beim externen Datenserver 30 feststellen können, ob sie sich auf dem aktuellen Stand befinden. Mischformeln, die daher stets einen aktuellen Stand aufweisen, sind mittels der Eingabeeinheit 5 selektierbar und aus der lokalen Speichereinheit 3 abrufbar, so dass der Mischvorgang manuell oder automatisch durchgeführt werden kann.

Figur 2 zeigt eine erfindungsgemässe Vorrichtung 1, geeignet zum automatisierten Mischen von Substanzen, indem die Prozessoreinheit 2 zusätzlich mit einem Treibermodul 9 verbunden ist, mit dem Ventile 91 von Zufuhrleitungen 92 steuerbar sind. Die Ventile 91 sind von der Prozessoreinheit 2 derart steuerbar, dass Anteile der zu mischenden Substanzen entsprechend den in der selektierten Mischformel angegebenen Mengen in den Behälter 61 abfüllbar sind.

Die Prozessoreinheit 2 vergleicht dazu einen in einer ausgewählten Mischformel enthaltenen Sollwert einer einzufüllenden Substanz mit dem von der Waage 6 gemessenen Istwert und steuert in Abhängigkeit davon die Zufuhr der einzufüllenden Substanz. Die Ventile 91 werden sequentiell derart gesteuert, dass jede Substanz solange in den Behälter 61 eingefüllt wird, bis der von der Waage 6 jeweils gemessene und rückgemeldete Gewichtswert dem in der Mischformel angegebenen Wert entspricht. Der Durchfluss der Substanzen kann zudem in Abhängigkeit des Füllstandes geregelt werden. Ausserdem kann nötigenfalls eine weitere Sequenz folgen, mit deren Hilfe sich festgestellte Ungenauigkeiten beim Einfüllen während der ersten Sequenz korrigieren lassen.

Die erfindungsgemässe Mischvorrichtung 1 wird über das öffentliche Mobilfunknetz oder über das lokale Funknetz W-LAN mit elektronischen Systemen der Lagerhaltung und/oder des Rechnungswesens verbunden, so dass Datenänderungen betreffend der Mischformeln oder Daten abgeschlossener Mischprozesse für die Lagerbewirtschaftung sowie zur Rechnungsstellung verwendet werden können. Ferner kann die Mischvorrichtung 1 mit einem Drucker versehen sein.

Die erfindungsgemässe Mischvorrichtung 1 ist in der Chemie-, der Pharma- und der Lebensmittelindustrie vorteilhaft einsetzbar. Besonders vorteilhaft kann sie in Betrieben eingesetzt werden, in denen Farbstoffe oder Lacke nur in geringen Mengen gemischt werden, um Schäden an lackierten Objekten, z.B. an Automobilen beheben zu können.

Die erfindungsgemässe Mischvorrichtung 1 kann verschiedenartig ausgestaltet sein. Die Anzeigeeinheit 4 und die Eingabeeinheit 5 können vorteilhaft zu einer Einheit, beispielsweise einem Touchscreen, zusammengefasst sein.
[1] US-Patentschrift No. 5,153,825
[2] US-Patentschrift No. 5,718,268
[3] Jerry D. Gibson, THE MOBILE COMMUNICATIONS HANDBOOK, CRC PRESS, Boca Raton 1999, 2nd Edition
[4] Bluetooth WHITE PAPER, Bluetooth Protocol Architecture, Version 1.0, issued by the Special Interest Group (SIG) on August 25, 1999
[5] J. Bray, F. Sturman, Bluetooth: Connect Without Cables, Prentice Hall Inc., New York 2001
[6] B. Walke, Mobilfunknetze und ihre Protokolle, Band 1, B.G. Teubner Verlag, Stuttgart 2000
[7] B. Walke, Mobilfunknetze und ihre Protokolle, Band 2, B.G. Teubner Verlag, Stuttgart 2000
[8] R. Sellin, Neue mobile Perspektiven mit WAP und GPRS, Der Fernmeldeingenieur, Verlag für Wissenschaft und Leben Georg Heidecker GmbH, Heft 5/'00, Erlangen 2000
[9] US-Patentschrift No. 5,905,719

## Patentansprüche

1. Vorrichtung (1) zum Mischen von Substanzen, insbesondere von Farbstoffen, mit einer Prozessoreinheit (2), einer zur Speicherung von Mischformeln dienenden lokalen Speichereinheit (3), einer Anzeigeeinheit (4) und einer Eingabeeinheit (5) wobei die Prozessoreinheit (2) mit einem Kommunikationsmodul (7) verbunden ist, **dadurch gekennzeichnet, dass** die Vorrichtung eine Waage (6) aufweist, mittels der Anteile von Substanzen in entsprechend einer Mischformel festgelegten Mengen manuell oder automatisch in einen Behälter (61) einfüllbar sind, dass das Kommunikationsmodul (7) zeitweise über eine drahtlose Kommunikationsverbindung mit einem Datenserver (30; 300) verbunden ist und diese zeitweilig bestehende Kommunikationsverbindung Daten von Mischformeln vom Datenserver (30; 300) zur lokalen Speichereinheit (3) überträgt, wobei die Speichereinheit (3) stets über einen aktuellen Datenstand von Mischformeln verfügt, wobei die Mischformeln aus der Speichereinheit (3) abrufbar sind und wobei die automatische Berechnung von Mischanteilen für frei wählbare Mengen von Mischprodukten automatisch in der Prozessoreinheit (2) ausführbar ist und dass die Prozessoreinheit (2), die Speichereinheit (3), die Anzeigeeinheit (4), die Eingabeeinheit (5) und das Kommunikationsmodul (7) in der Waage integriert sind.

2. Vorrichtung nach Anspruch 1, **dadurch gekennzeichnet, dass** das Kommunikationsmodul (7) nach mindestens einem Mobilfunk Protokoll oder/und nach mindestens einem "Wireless Local Area Network" Protokoll arbeitet und zum Aufbau entsprechender Kommunikationsverbindungen geeignet ist.

3. Vorrichtung (1) nach Anspruch 2, **dadurch gekennzeichnet, dass** die drahtlose Verbindung zum Datenserver (30, 300) über ein öffentliches Funknetz (PLMN) oder über ein drahtloses lokales Netz (W-LAN) und gegebenenfalls zusätzlich über ein öffentliches Kommunikationsnetz (PLMN, PSTN) besteht.

4. Vorrichtung (1) nach Anspruch 3, **dadurch gekennzeichnet, dass** die Verbindung zum Datenserver (30, 300) über das Internet erfolgt und in der Prozessoreinheit (2) oder im Kommunikationsmodul (7) ein nach dem Wireless Application Protokoll (WAP) oder nach dem Hyper Text Transfer Protokoll http arbeitender Browser installiert ist.

5. Vorrichtung (1) nach einem der Ansprüche 1-4, **dadurch gekennzeichnet, dass** eine Mischformel mittels der Eingabeeinheit (5) selektierbar und aus der Speichereinheit (3) abrufbar ist und dass Soll- und Istwert oder deren Differenz für das manuelle Zuführen der zu mischenden Substanzen auf der Anzeigeeinheit (4) darstellbar sind.

6. Vorrichtung (1) nach einem der Ansprüche 1-4, **dadurch gekennzeichnet, dass** die Prozessoreinheit (2) über eine Treibereinheit (9) auf Ventile (91) von Zufuhrleitungen (92) für das Zuführen der Substanzen zum Behälter (61) einwirkt.

7. Vorrichtung (1) nach Anspruch 6, **dadurch gekennzeichnet, dass** eine Mischformel mittels der Eingabeeinheit (5) selektierbar und aus der Speichereinheit (3) abrufbar ist und dass die entsprechend der selektierten Mischformel festgelegten Mengen der einzufüllenden Substanzen mittels der Treibereinheit (9) automatisch in den Behälter (61) einfüllbar sind.

8. Vorrichtung (1) nach einem der Ansprüche 1-7, **dadurch gekennzeichnet, dass** die Anzeigeeinheit (4) und die Eingabeeinheit (5) zu einer Einheit zusammengefasst sind.

9. Verfahren zum Betrieb einer Vorrichtung (1) nach Anspruch 1, **dadurch gekennzeichnet, dass** die Vorrichtung (1) regelmässig oder bedarfsweise drahtlose Kommunikationsverbindungen zu einem Datenserver (30, 300) erstellt und jeweils aktuelle Daten von Mischformeln zur lokalen Speichereinheit (3) der Vorrichtung (1) übertragen werden.

10. Verfahren nach Anspruch 9, **dadurch gekennzeichnet, dass** mittels der übertragenen Daten in der lokalen Speichereinheit (3)
a) neue Mischformeln hinzugefügt,
b) bestehende Mischformeln modifiziert und/oder
c) bestehende Mischformeln ersetzt werden.

11. Verfahren nach Anspruch 9 oder 10, **dadurch gekennzeichnet, dass** die Aktualisierung der Daten in der lokalen Speichereinheit (3)
a) vor dem Start- oder nach Beendigung des Mischprozesses,
b) in fest vorgegebenen oder wählbaren Zeitabständen,
c) manuell gesteuert nach Bedarf oder
d) initialisiert durch den Datenserver (30, 300), gegebenenfalls nach einer Revision seiner Datenbank (301, 31),
erfolgt.

12. Verfahren nach einem der Ansprüche 9, 10 oder 11, **dadurch gekennzeichnet, dass** eine Mischformel mittels der Eingabeeinheit (5) selektiert, aus der Speichereinheit (3) abgerufen, der entsprechende Sollwert und der von der Messvorrichtung gemessene Istwert oder deren Differenz auf der Anzeigeeinheit (4) dargestellt werden und die entsprechend der selektierten Mischformel festgelegte Menge der einzufüllenden Substanz manuell in den Behälter (61) eingefüllt wird.

13. Verfahren nach einem der Ansprüche 9, 10 oder 12, wobei die Prozessoreinheit (2) der Vorrichtung (1) über eine Treibereinheit (9) auf Ventile (91) von Zufuhrleitungen (92) für das Zuführen der Substanzen zum Behälter (61) einwirkt **dadurch gekennzeichnet, dass** eine Mischformel mittels der Eingabeeinheit (5) selektiert und aus der Speichereinheit (3) abgerufen wird und dass die entsprechend der selektierten Mischformel festgelegten Mengen der einzufüllenden Substanzen mittels der Treibereinheit (9) automatisch in den Behälter (61) eingefüllt werden.

## Claims

1. Device (1) for mixing substances, especially coloring substances, with a processor unit (2), a local memory unit (3) serving to store mixing formulas, a display unit (4), and input unit (5), wherein the processor unit (2) is connected to a communication module (7), **characterized in that** the device comprises a balance (6) by means of which portions of substances in quantities determined according to a mixing formula can be filled manually or automatically into a container (61), that the communications module (7) is connected at certain times to a data server (30; 300) via a wireless communications connection, that the temporarily existing communications connection transmits data of mixing formulas from the data server (30; 300) to the local memory unit (3), wherein the memory unit (3) is always up-to-date with a current state of mixing formulas, wherein the mixing formulas can be called up from the memory unit (3) and wherein the automatic calculation of mix portions for freely selectable quantities of mix products can be performed automatically in the processor unit (2), and that the processor unit (2), the memory unit (3), the indicator unit (4), the input unit (5) and the communications module (7) are incorporated in the balance.

2. Device according to claim 1, **characterized in that** the communications module (7) operates according to at least one mobile radio protocol or/and according to at least one Wireless Local Area Network protocol, and is suitable for establishing corresponding communications connections.

3. Device (1) according to claim 2, **characterized in that** the wireless connection to the data server (30, 300) is created via a public radio network (PLMN) or via a wireless local network (W-LAN) and if need be additionally via a public communications network (PLMN, PSTN).

4. Device (1) according to claim 3, **characterized in that** the connection to the data server (30, 300) takes place via the Internet, and that installed in the processor unit (2) or in the communications module (7) is a browser which operates according to the Wireless Application Protocol (WAP) or according to the Hypertext Transfer Protocol http.

5. Device (1) according to one of claims 1-4, **characterized in that** by means of the input unit (5) a mixing formula can be selected and called up from the memory unit (3), and that reference and actual values or their difference can be visualized on the display unit (4) for manual addition of the substances to be mixed.

6. Device (1) according to one of claims 1-4, **characterized in that** the processor unit (2) acts via a drive unit (9) on valves (91) of supply pipes (92) for the purpose of supplying the substances to the container (61).

7. Device (1) according to claim 6, **characterized in that** by means of the input unit (5) a mixing formula can be selected and called up from the memory unit (3), and that by means of the drive unit (9) the quantities of the substances to be filled, that are determined according to the selected mixing formulas, can be filled into the container (61) automatically.

8. Device (1) according to one of claims 1-7, **characterized in that** the display unit (4) and the input unit (5) are combined into one unit.

9. Method of operating a device (1) according to claim 1, **characterized in that** the device (1) regularly or as needed creates wireless communication connections to a data server (30, 300) and that each time up-to-date data of mixing formulas are transmitted to the local memory unit (3) of the device (1).

10. Method according to claim 9, **characterized in that** by means of the transmitted data in the local memory unit (3)
a) new mixing formulas are added,
b) existing mixing formulas are modified, and/or
c) existing mixing formulas are replaced.

11. Method according to claim 9 or 10, **characterized in that** updating of the data in the local memory unit (3) takes place
a) before the start, or after the end, of the mixing process,
b) at predefined fixed, or at selectable time intervals,
c) manually controlled as required, or
d) initiated by the data server (30, 300), possibly after a revision of its database (31, 301).

12. Method according to one of claims 9, 10, or 11, **characterized in that** a mixing formula is selected by means of the input unit (5), called up from the memory unit (3), the respective reference value and the actual value measured by the measuring device or their difference are visualized on the display unit (4), and the quantity of the substance to be filled, that is determined according to the selected mixing formulas, is manually filled into the container (61).

13. Method according to one of claims 9, 10, or 12, wherein the processor unit (2) of the device (1) acts via a drive unit (9) on valves (91) of supply pipes (92) to supply the substances to the container (61), **characterized in that** by means of the input unit (5) a mixing formula is selected and called up from the memory unit (3), and that by means of the drive unit (9) the quantities of the substances to be filled, that are determined according to the selected mixing formulas, can be filled into the container (61) automatically.

## Revendications

1. Dispositif (1) pour le mélange de substances, en particulier de colorants, avec une unité de processeur (2), une unité de mémorisation (3) locale servant à la mémorisation de formules de mélange, une unité d'affichage (4) et une unité d'entrée (5), l'unité de processeur (2) étant reliée à un module de communication (7), **caractérisé en ce que** le dispositif présente une balance (6), au moyen de laquelle des fractions de substances peuvent être versées manuellement ou automatiquement dans un réservoir (61) dans des quantités définies en fonction d'une formule de mélange, **en ce que** le module de communication (7) est relié par moments par une liaison de communication sans fil à un serveur de données (30 ; 300) et cette liaison de communication existant temporairement transmet des données de formules de mélange du serveur de données (30 ; 300) à l'unité de mémorisation (3) locale, l'unité de mémorisation (3) disposant toujours d'un stock de données actuelles de formules de mélange, les formules de mélanges pouvant être appelées à partir de l'unité mémorisation (3) et le calcul automatique de fractions de mélange pouvant être exécuté automatiquement dans l'unité de processeur (2) pour des quantités pouvant être choisies librement de produits mélangés et **en ce que** l'unité de processeur (2), l'unité de mémorisation (3), l'unité d'affichage (4), l'unité d'entrée (5) et le module de communication (7) sont intégrés dans la balance.

2. Dispositif selon la revendication 1, **caractérisé en ce que** le module de communication (7) travaille selon au moins un protocole de radiocommunication mobile et/ou selon au moins un protocole "Wireless Local Area Network" et est approprié pour l'établissement de liaisons de communication appropriées.

3. Dispositif (1) selon la revendication 2, **caractérisé en ce que** la liaison sans fil avec le serveur de données (30, 300) passe par un réseau radio (PLMN) public ou par un réseau (W-LAN) local sans fil et éventuellement en supplément par un réseau de communication (PLMN, PSTN) public.

4. Dispositif (1) selon la revendication 3, **caractérisé en ce que** la liaison avec le serveur de données (30, 300) passe par Internet et un navigateur fonctionnant selon le Wireless Application Protocol (WAP) ou selon le Hyper Text Transfert Protocol http est installé dans l'unité de processeur (2) ou dans le module de communication (7).

5. Dispositif (1) selon l'une quelconque des revendications 1 à 4, **caractérisé en ce qu'**une formule de mélange peut être sélectionnée au moyen de l'unité d'entrée (5) et peut être appelée à partir de l'unité de mémorisation (3) et **en ce que** la valeur de consigne et la valeur réelle ou leur différence peuvent être présentées sur l'unité d'affichage (4) pour l'alimentation manuelle des substances à mélanger.

6. Dispositif (1) selon l'une quelconque des revendications 1 à 4, **caractérisé en ce que** l'unité de processeur (2) agit au moyen d'une unité pilote (9) sur des vannes (91) de conduites d'alimentation (92) pour l'alimentation des substances au réservoir (61).

7. Dispositif (1) selon la revendication 6, **caractérisé en ce qu'**une formule de mélange peut être sélectionnée au moyen de l'unité d'entrée (5) et peut être appelée à partir de l'unité de mémorisation (3) et **en ce que** les quantités, définies selon la formule de mélange sélectionnée, des substances à verser peuvent être versées au moyen de l'unité pilote (9) automatiquement dans le réservoir (61).

8. Dispositif (1) selon l'une quelconque des revendications 1 à 7, **caractérisé en ce que** l'unité d'affichage (4) et l'unité d'entrée (5) sont regroupées en une unité.

9. Procédé pour l'exploitation d'un dispositif (1) selon la revendication 1, **caractérisé en ce que** le dispositif (1) établit de façon régulière ou en fonction des besoins des liaisons de communication sans fil avec un serveur de données (30, 300) et des données respectivement actualisées de formules de mélange sont transmises à l'unité de mémorisation (3) locale du dispositif (1).

10. Procédé selon la revendication 9, **caractérisé en ce que**, au moyen des données transmises et dans l'unité de mémorisation (3) locale,
a) de nouvelles formules de mélange sont ajoutées,
b) des formules de mélange existantes sont modifiées et/ou
c) des formules de mélange existantes sont remplacées.

11. Procédé selon la revendication 9 ou 10, **caractérisé en ce que** la mise à jour des données dans l'unité de mémorisation (3) locale intervient
a) avant le démarrage ou après la fin du processus de mélange,
b) à des intervalles de temps prédéfinis de façon fixe ou pouvant être choisis,
c) avec une commande manuelle en fonction des besoins ou
d) initialisée par le serveur de données (30, 300), éventuellement après une révision de sa banque de données (301, 31).

12. Procédé selon l'une quelconque des revendications 9, 10 ou 11, **caractérisé en ce qu'**une formule de mélange est sélectionnée au moyen de l'unité d'entrée (5), appelée à partir de l'unité de mémorisation (3), la valeur de consigne correspondante et la valeur réelle mesurée par le dispositif de mesure ou leur différence sont représentées sur l'unité d'affichage (4) et la quantité, définie en fonction de la formule de mélange sélectionnée, de la substance à verser est versée manuellement dans le réservoir (61).

13. Procédé selon l'une quelconque des revendications 9, 10 ou 12, l'unité de processeur (2) du dispositif (1) agissant au moyen d'une unité pilote (9) sur des vannes (91) de conduites d'alimentation (92) pour l'arrivée des substances au récipient (61), **caractérisé en ce qu'**une formule de mélange est sélectionnée au moyen de l'unité d'entrée (5) et est appelée à partir de l'unité de mémorisation (30) et **en ce que** les quantités, définies en fonction de la formule de mélange sélectionnée, des substances à verser sont versées au moyen de l'unité pilote (9) automatiquement dans le récipient (61).
